# EUROPEAN PATENT APPLICATION

(11) **EP 1 742 067 A2**
(43) Date of publication of application: **10.01.2007**
(21) Application number: 06122757.5
(22) Date of filing: 10.05.2005
(51) Int. Cl.: G01P 3/487, G01P 3/481, G01P 3/489, G01D 5/14, H02K 29/14, H02K 29/06, H02P 21/00

(54) **Method for detecting the speed and the position of a rotating shaft**

(30) Priority: 21.05.2004 IT GE20040045
(62) Divisional of application: 05103886.7
(71) Applicant: Selin Sistemi S.p.A., 16153 Genova (IT)
(72) Inventor: Mengaroni, Corrado, Sesto San Giovanni 20099 (IT); Pallottini, Alberto, Genova 16153 (IT)
(74) Representative: Porsia, Dino

(57) **Abstract**

Method for determining the speed and the position of a rotating shaft comprising the detection of a series of values relating to vectorial parameters within a given time interval, the digitalization of said values, the processing of said values by means of a suitable program which envisages the software implementation of a phase lock loop comprising: phase comparison of the digitalized data, the error calculation on the basis of the data within the loop, the adjustment/filtration of the data, the integration of the data, and the reintroduction of the data into the loop, suitably adapted to data scale factors, the angular velocity and angular position values of said shaft being retrieved for each instant.

## Description

The present invention relates to a method for detecting the speed and the position of a rotating shaft.

In numerous applications it is decidedly important to know the exact angular velocity of a rotating shaft, whether it be for operating machines or for other types of apparatus; moreover, it is often necessary to know also the exact position in which said rotating shaft is situated in a given instant. There exist a very large number of devices which hitherto have attempted to offer a solution to this type of need; in most cases two substantially opposing solutions have been proposed: in fact either the adaptability of the device intended for detection was ensured or extremely precise data was provided, but only for well-defined rotating apparatus. In practice it hitherto appeared to be extremely problematic to ensure a very high degree of precision with devices able to be easily "personalized" to suit various applications.

Among the various detection systems those which are widely used are based on magnetic interaction; generally a magnetic member is positioned on the movable part of the device, integral with the rotating shaft, and sensors means detect the magnetic field thereof.

As already mentioned above, one of the main problems is associated with the difficulty in obtaining precise data on rotating-shaft apparatus of a varying nature; in fact, these devices may normally be affected negatively by both the radial and the axial mechanical play of the rotating shaft. Moreover, in order to provide devices of this type which are sufficiently reliable and precise, hitherto it was necessary to adopt high-cost detection means which reduced considerably the areas of application of these systems.

Another important problem is related to the fact that the data retrieved from the detection devices have to be elaborated by complicated circuitry, which requires an accurate set-up and certain specific operational conditions. Therefore, an object of the present invention is to provide a method for determining the speed and the position of a rotating shaft which could be simply implemented on a standard processing unit.

The present invention relates to a method for determining the speed and the position of a rotating shaft, comprising the detection of a series of values relating to vectorial parameters within a given time interval, the digitalization of said values, the processing of said values by means of a suitable program which envisages the software implementation of a phase lock loop comprising: the conversion of the digitalized data, the error calculation on the basis of the data within the loop, the adjustment/filtration of the data, the integration of the data and the reintroduction of the data into the loop, suitably adapted to data scale factors, the angular velocity and angular position values of said shaft being retrieved for each instant.

Further advantages and characteristic features of the device according to the present invention will emerge from the following description of an embodiment thereof, provided by way of a non-limiting example, with reference to the plates of the accompanying drawings, in which:
Figure 1 is a block diagram which shows schematically the hardware and software implementation of the method according to the present invention; and
Figure 2 is a flow diagram which shows the program for implementing the phase lock loop used in accordance with the method of the present invention.

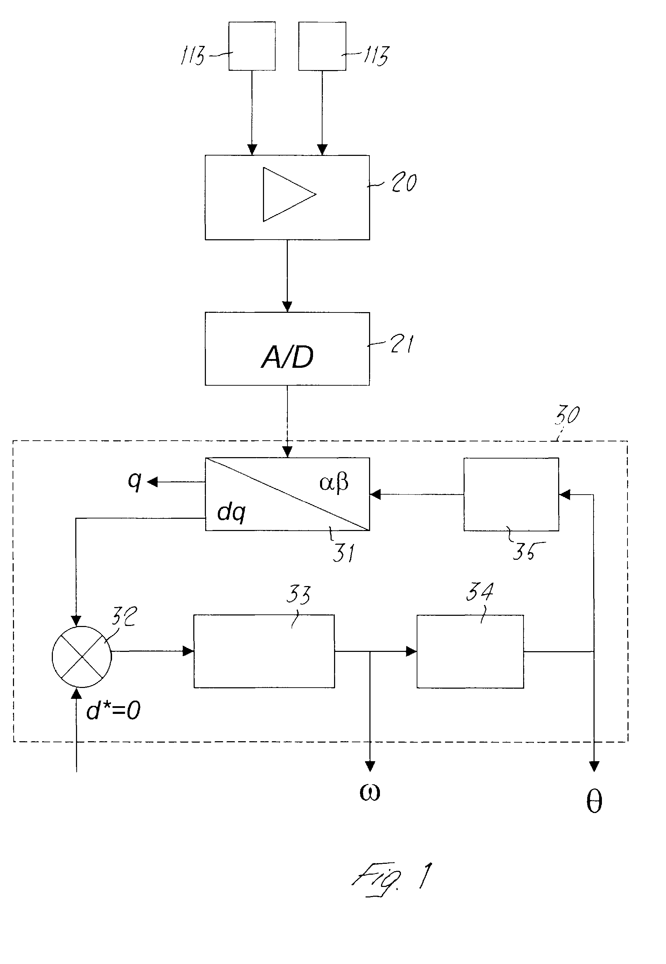

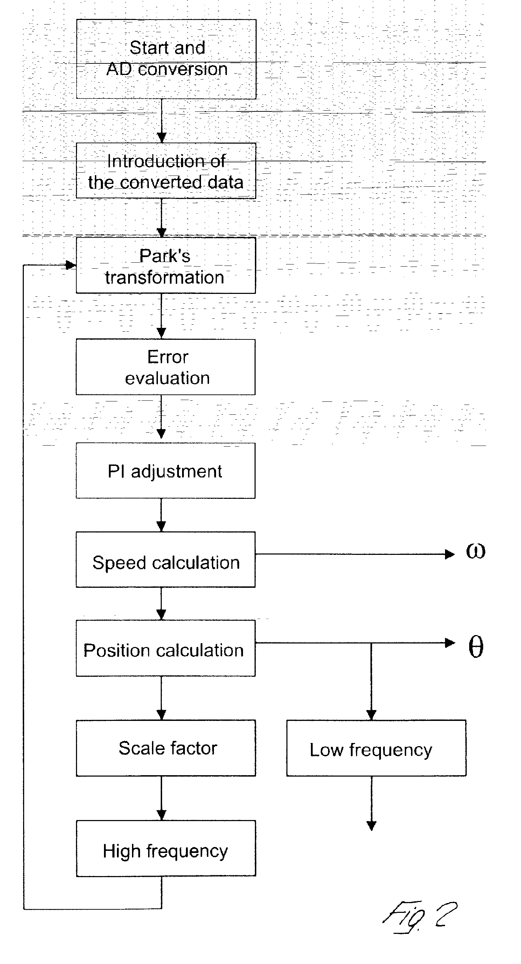

With reference to Figures 1 and 2, the method according to the present invention will now be described. The signal supplied by the two sensors 113, namely a sinusoidal voltage, resulting from the sinusoidal character of the magnetic field of the member 202, is amplified at 20 in such a way as to adjust all the data obtained within the range of 0-5 V suitable for analog/digital conversion (21) into data with 10-bit resolution. The digitalized data then undergoes the processing step (indicated by the broken line 30) consisting in software implementation of a phase lock loop; Park's transformation (31) is applied to the data introduced after digitalization together with that generated in the loop. Subsequently the comparison (32) results in determination of the error between the two series of data; after suitable adjustment (33), the first result which is obtained is the angular velocity w and, thereafter, following integration (34) the electrical position θ of the shaft is obtained. This data, after suitable readaptation (35), is introduced again into the loop for comparison with the new digitalized data supplied by the sensors 113.

The phase lock loop is a control system, the aim of which is synchronization of the instantaneous angle, or the phase and the frequency, of a signal generated locally with a signal provided at the input, also called a reference signal. In the literature, the term PLL, an abbreviation of Phase Lock Loop, is widely used.

Synchronization of the instantaneous angle (or also "locking") is performed by means of comparison of the phases. Once this state has been achieved, the phase error between the reference signal and the signal generated locally is very small or zero. If this error, owing to a disturbance or a variation of the input signal, starts to increase, the control mechanism responds, altering its own operating state, so as to reset the value thereof.

The components of a PLL in a configuration of a generic type are: a phase comparator or detector (PD), a loop filter (LF) and a voltage controlled oscillator (VCO). In the case of the method according to the present invention, the components of the phase lock loop are implemented on a software level by suitable operators; Park's transformation (31) performs the task of a phase comparator, the adjusting proportional integrator (33) performs the function of the loop filter and the integrator (34) that of the controlled voltage oscillator. Park's transformation, which historically was devised for studying the dynamics of rotating electric machines, is commonly used in this sector; in this case the transformation was applied to rotating shafts.

Figure 2 shows in greater detail the main processing steps which form the program used in the method according to the present invention; the values detected and amplified as described above are digitalized and memorized; then they are processed using Park's transformation together with the data supplied by the loop. By convergence of the two sets of data, namely minimization of the error generated, after adjustment by means of the proportional integrator, detection of the speed is performed, and the angular position is obtained by integrating this data. The data which is reintroduced into the cycle of the phase lock loop is rebalanced by means of a scale factor which takes into account the electrical frequency ratio which exists between the sensors and the induction motor which move the rotating axis. The low frequency data is thus used to monitor the electric frequency of the induction motor, while the normalised high frequency data is reintroduced into the phase lock loop. The program described above may be realized in different computer languages; in a preferred embodiment assembly language was chosen.

The central processing unit, which comprises the amplifier means 20, the analog/digital conversion means 21 and the processor means in which the phase lock loop was implemented, may be positioned both in the machine to be monitored in the vicinity of the sensor means, or incorporated into the static part of said sensor, and in the power supply and control panel of said machine.

## Claims

1. Method for determining the speed and the position of a rotating shaft comprising the detection of a series of values relating to vectorial parameters within a given time interval, the digitalization of said values, the processing of said values by means of a suitable program which envisages the software implementation of a phase lock loop comprising: phase comparison of the digitalized data, the error calculation on the basis of the data within the loop, the adjustment/filtration of the data, the integration of the data, and the reintroduction of the data into the loop, suitably adapted to data scale factors, the angular velocity and angular position values of said shaft being retrieved for each instant.

2. Method according to Claim 1, in which said vectorial parameters are sinusoidal voltages, a step involving amplification of the detected signal being envisaged before the digitalization step.

3. Method according to Claim 2, in which said amplification step adjusts all the signals detected in the range of between 0 and 5 V.

4. Method according to Claim 3, in which said digitalization step is performed with 10-bit resolution.

5. Method according to any one of the preceding Claims 2 to 4, in which said phase comparison step is performed by means of application of Park's transformation.

6. Computer program, which can be directly loaded into the internal memory of a computer, comprising suitable software codes able to perform the steps of the method according to any one of Claims 1 to 5, when said program is started in a computer.

7. Program according to Claim 6, in which the software codes used to compile said program are in assembly language.
